# FASCICULE DE BREVET EUROPEEN

(11) **EP 3 659 901 B1**
(45) Date de publication et mention de la délivrance du brevet: **30.06.2021**
(21) Numéro de dépôt: 19211051.8
(22) Date de dépôt: 22.11.2019
(51) Int. Cl.: B62D 25/24

(54) **DISPOSITIF D'OBTURATION D'UNE OUVERTURE TRAVERSANTE D'UN ÉLÉMENT DE CARROSSERIE D'UN VÉHICULE**
VERSCHLUSSVORRICHTUNG EINER DURCHGEHENDEN ÖFFNUNG EINES KAROSSERIEELEMENTS EINES FAHRZEUGS
DEVICE FOR SEALING AN OPENING THROUGH A BODY PART OF A VEHICLE

(30) Priorité: 29.11.2018 FR 1872073
(43) Date de publication de la demande: 03.06.2020
(73) Titulaire: ADHEX TECHNOLOGIES, 21300 Chenôve (FR)
(72) Inventeur: VION, Hervé, 21130 VILLERS LES POTS (FR); DURAND, Hervé, 21000 DIJON (FR); RAPENNE, Emmanuel, 21850 SAINT APOLLINAIRE (FR); CHARPY, Stéphane, 21000 DIJON (FR)
(74) Mandataire: Cabinet Bleger-Rhein-Poupon

(56) Documents cités:
- WO-A1-00/05320
- WO-A1-83/02102
- WO-A1-2004/011320
- DE-A1- 1 942 761
- Anonymous: "Body Drain Plugs - Mercedes-Benz Forum", , 13 juillet 2013 (2013-07-13), XP055603182, Extrait de l'Internet: URL:https://www.benzworld.org/forums/w123- e-ce-d-cd-td/1721195-body-drain-plugs.html [extrait le 2019-07-08]
- Anonymous: "Mercedes Benz W113 Pagoda Rubber Plug for Bulk Head or Floor Pan | The SL Shop", , 8 juillet 2019 (2019-07-08), XP055603005, Extrait de l'Internet: URL:https://www.theslshop.com/parts-shop/m ercedes-benz-w113-sl-pagoda-parts/body-par ts/mercedes-benz-w113-pagoda-rubber-plug-f or-bulk-head-or-floor-pan.html [extrait le 2019-07-08]
- Anonymous: "Mercedes-Benz 32mm Rubber Blanking Grommet 1109870544 | The SL Shop", , 8 juillet 2019 (2019-07-08), XP055603023, Extrait de l'Internet: URL:https://www.theslshop.com/parts-shop/m ercedes-benz-sl-w113-107-r129-rubber-blank ing-grommet-32mm.html [extrait le 2019-07-08]

## Description

La présente invention concerne un dispositif d'obturation d'une ouverture que comporte un élément de carrosserie d'un véhicule.

Cette description a, également, trait à un procédé de fabrication d'un tel dispositif d'obturation ainsi qu'à une installation de fabrication d'un tel dispositif d'obturation. L'invention concerne, encore, un ensemble comportant, d'une part, un élément de carrosserie comportant au moins une ouverture et, d'autre part, au moins un dispositif d'obturation d'une telle ouverture. L'invention concerne aussi un procédé d'obturation d'une ouverture que comporte un élément de carrosserie.

La présente invention concerne le domaine de la fabrication des équipements destinés à équiper un véhicule, notamment des équipements destinés à équiper un élément de carrosserie d'un tel véhicule. Sans n'y être aucunement limitée, cette invention trouvera une application particulièrement appropriée dans le domaine de la fabrication des équipements destinés à équiper un véhicule automobile.

L'on connait, d'ores et déjà, des éléments de carrosserie de véhicule, notamment sous la forme d'une portière ou analogue. Un tel élément de carrosserie peut, alors, comporter, d'une part, une partie externe, qui est destinée à être orientée en direction de l'extérieur du véhicule, et qui présente une large surface et, d'autre part, une partie interne, qui est destinée à être orientée en direction de l'intérieur du véhicule (notamment en direction de l'habitacle de ce véhicule), qui est assemblée à la partie externe, et qui définit, avec cette partie externe, un volume interne à l'élément de carrosserie. Cette partie interne comporte au moins une ouverture traversante conçue pour permettre d'insérer des équipements à l'intérieur du volume interne de l'élément de carrosserie et/ou de connecter de tels équipements à d'autres équipements externes à l'élément de carrosserie, ceci au travers d'une telle ouverture et/ou de procéder à des opérations de maintenance ou de réparation de ces équipements ou de l'élément de carrosserie.

On observera que de l'eau est susceptible de s'écouler à l'intérieur du volume interne de l'élément de carrosserie et qu'il est nécessaire que cette eau ne pénètre pas à l'intérieur du véhicule, notamment à l'intérieur de l'habitable de ce véhicule.

Pour ce faire, il est connu de recouvrir totalement au moins l'ouverture ou les ouvertures que comporte la partie interne de l'élément de carrosserie, ceci par l'intermédiaire d'un panneau qui est rapporté sur l'élément de carrosserie et qui est solidarisé de cet élément de carrosserie usuellement par collage. Pour que ce collage puisse être assuré de manière appropriée, il est nécessaire de réaliser un traitement préalable de l'élément de carrosserie, en particulier de la périphérie de l'ouverture ou des ouvertures de cet élément de carrosserie. On observera que ce traitement est long et fastidieux. De plus, il n'est pas possible de vérifier que ce traitement ait été réalisé de manière appropriée avant de procéder au collage. Ces inconvénients augmentent les malfaçons et, par conséquent, les coûts de production de l'élément de carrosserie.

Pour remédier à ces inconvénients, il a été imaginé de réaliser, par injection, une pièce en matière plastique, qui présente une forme sensiblement identique à celle de l'ouverture, et qui comporte une gorge qui est destinée à coopérer avec une bordure spécifique que comporte l'élément de carrosserie en périphérie de l'ouverture. A ce propos, on observera que la réalisation d'une telle pièce par injection nécessite un investissement important dans l'outil de production, en particulier dans le moule, ce qui est incompatible avec la réalisation de telles pièces en petites séries. De plus, la réalisation d'une telle pièce demande beaucoup de soin et de précision pour que cette pièce puisse s'adapter à la forme et aux dimensions de l'ouverture à obturer et pour que la gorge de cette pièce puisse assurer une étanchéité satisfaisante. Finalement, cette solution nécessite la réalisation d'une bordure spécifique en périphérie de l'ouverture de l'élément de carrosserie. La réalisation d'une telle bordure spécifique implique que la fabrication de l'élément de carrosserie soit assurée avec une bonne répétabilité, ceci en sorte que la coopération entre la bordure spécifique et la gorge= permette de garantir une étanchéité appropriée. L'ensemble de ces facteurs implique un soin particulier, une attention importante ainsi que des mises au point longues et coûteuses qui génèrent des coûts de production élevés.

La présente invention se veut de remédier aux inconvénients des dispositifs d'obturation de l'état de la technique.

Un autre objectif de la présente invention est de proposer un dispositif d'obturation qui permette d'assurer une obturation d'une ouverture de manière simple, rapide, et avec peu de manipulations tout en assurant une étanchéité appropriée.

Encore un autre objectif de l'invention est de proposer un dispositif d'obturation qui puisse être démonté, ceci en vue de faciliter les opérations de maintenance ou de réparation sur l'élément de carrosserie. Des objectifs additionnels sont de faciliter un tel démontage et de réduire les dégradations susceptibles d'être occasionnées à ce dispositif d'obturation lors d'un tel démontage, ceci en vue de permettre la réutilisation de ce dispositif d'obturation. Finalement, un objectif de l'invention est de permettre et de faciliter le recyclage du dispositif d'obturation.

A cet effet, l'invention concerne un dispositif d'obturation d'une ouverture traversante d'un élément de carrosserie d'un véhicule. Ce dispositif comporte un élément d'obturation ainsi qu'au moins un moyen de fixation, qui est configuré pour fixer le dispositif d'obturation sur une bordure de l'ouverture traversante, que comporte une bordure de ce dispositif d'obturation, et qui s'étend à partir de l'élément d'obturation et en périphérie de cet élément d'obturation.

Ce dispositif d'obturation est caractérisé par le fait que l'élément d'obturation est constitué par un panneau qui est en mousse d'au moins un polymère, et qui présente une masse volumique comprise entre 70 kg/m³ et 450 kg/m³ ainsi qu'une épaisseur comprise entre 2mm et 5mm.

Encore une autre caractéristique concerne le fait que, d'une part, ledit au moins un polymère est constitué par une polyoléfine, d'autre part, le panneau en mousse présente une masse volumique comprise entre 70 kg/m³ et 450 kg/m³ ainsi qu'une épaisseur comprise entre 2mm et 5mm.

De manière alternative, ledit au moins un polymère est constitué par un polyester tandis que le panneau en mousse présente une masse volumique comprise entre 100 kg/m³ et 300 kg/m³ ainsi qu'une épaisseur comprise entre 2mm et 3,5mm.

De manière additionnelle, le panneau en mousse présente un module d'Young longitudinal compris entre 30.10⁶ Pa et 300.10⁶ Pa et/ou un module d'Young transversal compris entre 20.10⁶ Pa et 300.10⁶ Pa.

De manière additionnelle, le panneau en mousse présente une dureté shore A comprise entre 35 et 80 et/ou une dureté shore D comprise entre 5 et 25.

Encore de manière additionnelle, la mousse du panneau en mousse comporte un nombre de cellules compris entre 5 et 60 cellules par centimètre.

Encore une autre caractéristique consiste en ce que le moyen de fixation s'étend sur l'intégralité du pourtour de l'élément d'obturation.

En fait, ledit au moins un moyen de fixation comporte, chacun, au moins un moyen d'accrochage configuré pour s'accrocher sur la bordure de l'ouverture traversante.

Une autre caractéristique consiste en ce que le dispositif d'obturation comporte des moyens d'étanchéité qui sont au moins en partie constitués par ledit élément d'obturation et/ou par ledit au moins un moyen de fixation.

De manière alternative, le dispositif d'obturation comporte des moyens d'étanchéité qui sont au moins en partie constitués par un revêtement qui revêt au moins une partie de l'élément d'obturation et/ou au moins une partie dudit au moins un moyen de fixation.

De manière alternative, ces moyens d'étanchéité sont au moins en partie constitués par un cordon ou par une bande, et équipent au moins une partie de l'élément d'obturation et/ou au moins une partie dudit au moins un moyen de fixation.

Le dispositif d'obturation comporte des moyens d'adhérence pour réaliser une adhérence déterminée dudit élément d'obturation et/ou dudit au moins un moyen de fixation sur l'élément de carrosserie.

Le dispositif d'obturation comporte des moyens d'amortissement vibratoire, qui équipent au moins ledit élément d'obturation et/ou que comporte, intérieurement ou extérieurement, au moins ledit élément d'obturation.

Le dispositif d'obturation comporte des moyens de rigidification pour rigidifier au moins l'élément d'obturation.

L'invention concerne, encore, un ensemble comportant, d'une part, un élément de carrosserie de véhicule qui comporte au moins une ouverture et, d'autre part, au moins un dispositif d'obturation, qui présente au moins les caractéristiques mentionnées ci-dessus, et qui referme, chacun, ladite au moins une ouverture.

L'invention concerne, aussi, un procédé de fabrication d'un tel dispositif d'obturation d'une ouverture d'un élément de carrosserie d'un véhicule. Ce procédé de fabrication consiste en ce qu'au moins ledit élément d'obturation est réalisé par thermoformage d'une mousse, ceci dans un moule de thermoformage.

L'invention concerne, également, une installation de fabrication d'un tel dispositif d'obturation d'une ouverture d'un élément de carrosserie.

Finalement, l'invention concerne un procédé d'obturation d'une ouverture que comporte un élément de carrosserie d'un véhicule.

Ainsi, le dispositif d'obturation conforme à l'invention comporte un élément d'obturation ainsi qu'au moins un moyen de fixation, qui est configuré pour fixer le dispositif d'obturation sur une bordure de l'ouverture, que comporte une bordure de ce dispositif d'obturation, et qui s'étend à partir de l'élément d'obturation et en périphérie de cet élément d'obturation.

Ce dispositif d'obturation permet, avantageusement, de faciliter la mise en place d'un tel dispositif d'obturation au niveau d'une ouverture que comporte un élément de carrosserie.

Un tel dispositif d'obturation comporte un élément d'obturation constitué par un panneau (notamment thermoformé) en mousse d'au moins un polymère. Ceci permet, avantageusement, de faciliter le procédé de fabrication d'un tel dispositif d'obturation.

Ce panneau en mousse d'au moins un polymère présente une masse volumique comprise entre 70 kg/m³ et 450 kg/m³ ainsi qu'une épaisseur comprise entre 2mm et 5mm.

Ces caractéristiques permettent, avantageusement et de manière surprenante, d'une part, de garantir l'étanchéité entre deux côtés de l'élément de carrosserie (plus particulièrement entre une zone humide située d'un côté de cet élément de carrosserie et une zone sèche située de l'autre côté de cet élément de carrosserie), d'autre part, de garantir le maintien en position du dispositif d'obturation sur un tel élément de carrosserie, d'autre part encore, de faciliter la mise en place de ce dispositif d'obturation sur cet élément de carrosserie ainsi que le retrait de ce dispositif d'obturation hors de cet élément de carrosserie et, d'autre part aussi, d'assurer un amortissement vibratoire permettant de remédier aux bruits résultant aussi bien d'une excitation solidienne (plus particulièrement résultant du groupe motopropulseur) que d'une excitation aérienne (notamment résultant d'un système audio).

Une autre caractéristique concerne le fait que le dispositif d'obturation comporte un moyen de fixation qui s'étend sur l'intégralité du pourtour de l'élément d'obturation. Ceci permet, avantageusement, d'assurer une fixation homogène et uniformément répartie du dispositif d'obturation sur l'élément de carrosserie.

Le dispositif d'obturation comporte, encore, des moyens d'étanchéité qui permettent, avantageusement, de garantir l'étanchéité entre une zone humide et une zone sèche de l'élément de carrosserie.

Le dispositif d'obturation comporte, aussi, des moyens d'adhérence qui permettent, avantageusement, d'améliorer l'étanchéité procurée par les moyens d'étanchéité.

Le dispositif d'obturation comporte des moyens d'amortissement vibratoire qui permettent, avantageusement, d'améliorer l'isolation phonique de l'habitacle du véhicule par rapport à l'environnement extérieur de ce véhicule.

Le dispositif d'obturation comporte des moyens de rigidification qui permettent, avantageusement, d'améliorer la tenue dans le temps du dispositif d'obturation et de contribuer à la rigidité de l'élément de carrosserie.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

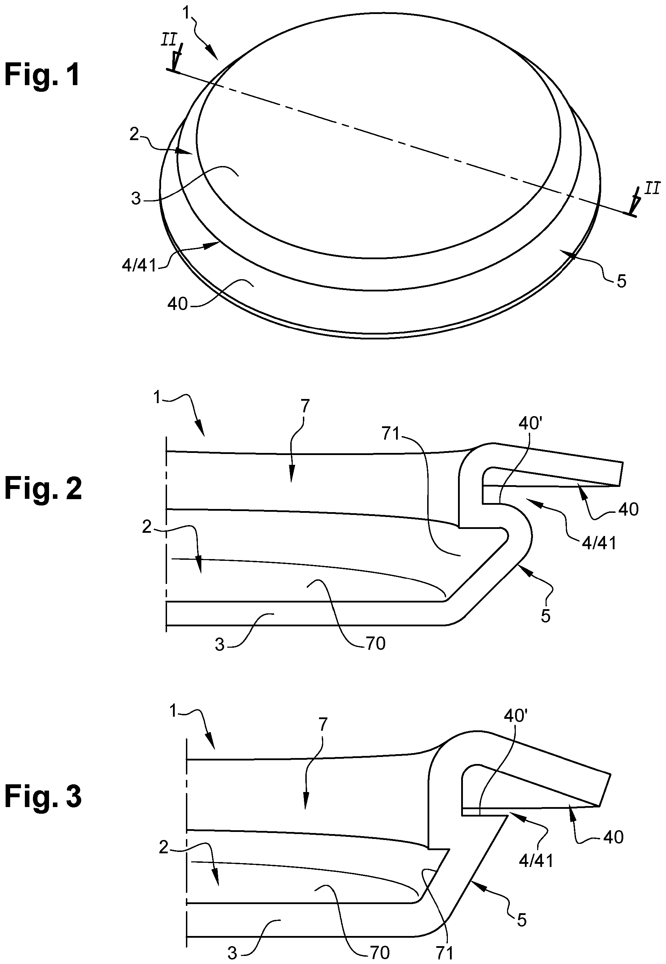

- la figure 1 est une vue schématisée et en perspective du dispositif d'obturation conforme à l'invention ;
- la figure 2 est une vue schématisée, partielle, et en coupe selon II-II du dispositif d'obturation illustré figure 1, ceci selon un premier mode de réalisation ;
- la figure 3 est une vue schématisée, partielle, et en coupe selon II-II du dispositif d'obturation illustré figure 1, ceci selon un deuxième mode de réalisation ;
- la figure 4 est une vue schématisée, partielle et de dessus d'un ensemble qui comporte un élément de carrosserie et un dispositif d'obturation ;
- la figure 5 est une vue schématisée, partielle et de dessous d'un ensemble, qui a été illustré figure 4, et qui comporte un élément de carrosserie et un dispositif d'obturation.

La présente invention concerne le domaine de la fabrication des équipements destinés à équiper un véhicule, notamment des équipements destinés à équiper un élément de carrosserie d'un véhicule automobile, ferroviaire, maritime, aérien ou autre.

Un tel véhicule comporte, alors, au moins un élément de carrosserie E qui peut être constitué par une portière ou autre.

Un tel élément de carrosserie E peut comporter, d'une part, une zone humide, qui est orientée en direction de l'extérieur du véhicule, et qui susceptible d'être en contact avec de l'eau, notamment par écoulement de pluie qui s'écoule à l'intérieur de ce volume interne (par exemple entre une vitre et un joint que comporte la portière). D'autre part, un tel élément de carrosserie E peut comporter une zone sèche, qui est orientée en direction de l'intérieur de l'habitacle du véhicule, qui peut contenir des équipements (notamment électriques), et qu'il convient de maintenir au sec.

Un tel élément de carrosserie E peut, aussi, comporter au moins une ouverture traversante O, qui permet de mettre en communication la zone sèche et la zone humide, et qui est configurée pour permettre une opération de fabrication (notamment une implantation d'un équipement), de maintenance (notamment un entretien d'un équipement) ou de réparation (notamment un remplacement d'un équipement) à l'intérieur de la zone humide et à partir de la zone sèche.

L'invention concerne, alors, un dispositif d'obturation 1 d'une telle ouverture traversante O d'un élément de carrosserie E d'un véhicule, notamment automobile, ferroviaire, maritime ou aérien.

Un tel dispositif d'obturation 1 comporte un élément d'obturation 2.

Un tel élément d'obturation 2 est constitué par un panneau 3 en mousse d'au moins un polymère.

Un tel panneau 3 est, de préférence, thermoformé.

En fait, ladite mousse d'un tel panneau 3 présente une pluralité de cellules, de préférence fermées.

En ce qui concerne ledit au moins un polymère, celui-ci est, de préférence, constitué par une polyoléfine ou par un mélange d'une pluralité de polyoléfines.

Quoi qu'il en soit, le panneau 3 en mousse d'au moins un polymère présente, alors, une épaisseur comprise entre 2mm (millimètre) et 5mm (millimètre).

Une telle épaisseur est mesurée selon la méthode ISO 1923.

Selon l'invention , le panneau 3 en mousse présente une masse volumique comprise entre 70kg/m³ (kilogramme par mètre cube) et 450kg/m³ (kilogramme par mètre cube).

Une telle masse volumique est mesurée selon la méthode ISO 845.

Encore de manière alternative ou (et de préférence) additionnelle, le panneau 3 en mousse présente une masse surfacique comprise entre 0,270kg/m² (kilogramme par mètre carré) et 1,5kg/m² (kilogramme par mètre carré) et/ou un module de Young compris entre 30N/mm² (Newton par millimètre carré) et 300N/mm² (Newton par millimètre carré).

En fait, ce panneau 3 en mousse présente, de préférence, un module d'Young longitudinal compris entre 30.10⁶ Pa et 300.10⁶ Pa et/ou un module d'Young transversal compris entre 20.10⁶ Pa et 300.10⁶ Pa.

Un tel module d'Young est mesuré par un test de traction, selon le cas dans les sens longitudinal ou transversal, sur des éprouvettes selon la méthode D411009.

De manière alternative ou (et de préférence) additionnelle, que le panneau 3 en mousse présente une dureté shore A comprise entre 35 et 80 et/ou une dureté shore D comprise entre 5 et 25.

Une telle dureté shore A ou D est mesurée avec des duromètres électroniques selon une méthode d'essai ISO 868 ou ISO 7619.

Tel que mentionné ci-dessus, la mousse d'un tel panneau 3 présente une pluralité de cellules. A ce propos, on observera que cette mousse comporte, alors, un nombre de cellules compris entre 5 et 60 cellules par centimètre.

De manière alternative ou (et de préférence) additionnelle la mousse d'au moins un polymère est de type ignifuge.

Tel que mentionné ci-dessus, l'élément d'obturation 2 est constitué par un panneau 3 qui est en mousse d'au moins un polymère.

Selon un premier type de réalisation, ledit au moins un polymère est constitué par une polyoléfine. Dans ce cas, le panneau 3 en mousse présente une masse volumique comprise entre 70 kg/m³ (kilogramme par mètre cube) et 450 kg/m³ (kilogramme par mètre cube) ainsi qu'une épaisseur comprise entre 2mm (millimètre) et 5mm (millimètre).

De manière additionnelle, le panneau 3 en mousse d'au moins une polyoléfine présente un module d'Young longitudinal compris entre 30.10⁶ Pa et 300.10⁶ Pa et/ou un module d'Young transversal compris entre 20.10⁶ Pa et 300.10⁶ Pa.

De manière alternative ou (et de préférence) additionnelle, un tel panneau 3 en mousse présente une dureté shore A comprise entre 35 et 80 et/ou une dureté shore D comprise entre 5 et 25.

De manière alternative ou (et de préférence) additionnelle, la mousse de ce panneau 3 comporte un nombre de cellules compris entre 5 et 60 cellules par centimètre.

Selon un premier mode de réalisation de ce premier type de réalisation, la polyoléfine est un polypropylène (PP), notamment réticulé ou (et de préférence) non réticulé, ceci de sorte que la mousse d'au moins un polymère est une mousse d'au moins un polypropylène (PP), notamment réticulé ou non réticulé.

Le panneau 3 en mousse d'au moins une telle polyoléfine (constituée par un polypropylène PP) présente une masse volumique comprise entre 80 kg/m³ (kilogramme par mètre cube) et 400 kg/m³ (kilogramme par mètre cube), de préférence comprise entre 90 kg/m³ (kilogramme par mètre cube) et 335 kg/m³ (kilogramme par mètre cube).

Le panneau 3 en mousse d'au moins une telle polyoléfine (constituée par un polypropylène PP) présente une épaisseur comprise entre 2,5mm (millimètre) et 4,5mm (millimètre), de préférence comprise entre 3mm (millimètre) et 4mm (millimètre).

De manière alternative ou (et de préférence) additionnelle, le panneau 3 en mousse d'au moins un polypropylène (PP) présente un module d'Young longitudinal compris entre 30.10⁶ Pa et 300.10⁶ Pa (de préférence compris entre 50.10⁶ Pa et 260.10⁶ Pa) et/ou un module d'Young transversal compris entre 20.10⁶ Pa et 300.10⁶ Pa (de préférence compris entre 25.10⁶ Pa et 260.10⁶ Pa) .

De manière alternative ou (et de préférence) additionnelle, un tel panneau 3 en mousse présente une dureté shore A comprise entre 45 et 80 (de préférence comprise entre comprise entre 50 et 75) et/ou une dureté shore D comprise entre 7 et 25 (de préférence comprise entre 10 et 20).

De manière alternative ou (et de préférence) additionnelle, la mousse de ce panneau 3 comporte un nombre de cellules compris entre 9 et 20 cellules par centimètre.

Un exemple de réalisation concerne un panneau 3 d'une telle mousse de polypropylène (PP) qui est ignifuge et qui peut présenter une épaisseur de 3mm (millimètre) et/ou une masse volumique de 167kg/m³ (kilogramme par mètre cube) et/ou une masse surfacique de 0,5kg/m² (kilogramme par mètre carré) et/ou être fournie par JIFFY.

Selon un deuxième mode de réalisation de ce premier type de réalisation, la polyoléfine est un polyéthylène (PE), notamment réticulé chimiquement (telle que la mousse vendue par la société Trocellen) ou physiquement (telle que la mousse vendue par la société Alvéo), ceci de sorte que la mousse d'au moins un polymère est une mousse d'au moins un polyéthylène (PE), notamment réticulée chimiquement (telle que la mousse vendue par la société Trocellen) ou physiquement (telle que la mousse vendue par la société Alvéo).

Le panneau 3 en mousse d'au moins une telle polyoléfine (constituée par un polyéthylène PE) présente une masse volumique comprise entre 250 kg/m³ (kilogramme par mètre cube) et 350 kg/m³ (kilogramme par mètre cube), de préférence de l'ordre de 300 kg/m³ (kilogramme par mètre cube).

Le panneau 3 en mousse d'au moins une telle polyoléfine (constituée par un polyéthylène PE) présente une épaisseur comprise entre 2,5mm (millimètre) et 3,5mm (millimètre), de préférence de l'ordre de 3mm (millimètre).

De manière alternative ou (et de préférence) additionnelle, le panneau 3 en mousse d'au moins un polyéthylène (PE) présente un module d'Young longitudinal compris entre 40.10⁶ Pa et 65.10⁶ Pa (de préférence de l'ordre de 52.10⁶ Pa) et/ou un module d'Young transversal compris entre 28.10⁶ Pa et 40.10⁶ Pa (de préférence de l'ordre de 34.10⁶ Pa).

De manière alternative ou (et de préférence) additionnelle, un tel panneau 3 en mousse présente une dureté shore A comprise entre 40 et 52 (de préférence de l'ordre de 46) et/ou une dureté shore D comprise entre 7 et 13 (de préférence de l'ordre de 10).

De manière alternative ou (et de préférence) additionnelle, la mousse de ce panneau 3 comporte un nombre de cellules compris entre 25 et 50 cellules par centimètre, de préférence compris entre 35 et 40 cellules par centimètre.

Un exemple de réalisation concerne un panneau 3 d'une telle mousse de polyéthylène (PE) qui est ignifuge et qui peut présenter une épaisseur de 2,7mm (millimètre) et/ou une masse volumique de 333kg/m³ (kilogramme par mètre cube) et/ou une masse surfacique de 0,9kg/m² (kilogramme par mètre carré) et/ou être fournie par la société Sekisui ALVEO (réf. Alveolen NE FFA 03 02,7).

Selon un deuxième type de réalisation, ledit au moins un polymère est constitué par un polyester, notamment saturé. Dans ce cas, le panneau 3 en mousse présente une masse volumique comprise entre 100 kg/m³ (kilogramme par mètre cube) et 300 kg/m³ (kilogramme par mètre cube) ainsi qu'une épaisseur comprise entre 2mm (millimètre) et 3,5mm (millimètre).

De manière additionnelle, le panneau 3 en mousse d'au moins un polyester présente un module d'Young longitudinal compris entre 100.10⁶ Pa et 150.10⁶ Pa et/ou un module d'Young transversal compris entre 100.10⁶ Pa et 180.10⁶ Pa.

De manière alternative ou (et de préférence) additionnelle, un tel panneau 3 en mousse présente une dureté shore A comprise entre 40 et 80 et/ou une dureté shore D comprise entre 6 et 18.

De manière alternative ou (et de préférence) additionnelle, la mousse de ce panneau 3 comporte un nombre de cellules compris entre 20 et 60 cellules par centimètre.

Selon un mode de réalisation particulier, le polyester saturé est un polyéthylène téréphtalate (PET), notamment non réticulé et/ou de type grade soft, ceci en sorte que la mousse d'au moins un polymère est une mousse de polyéthylène téréphtalate (PET), notamment non réticulé et/ou de type grade soft.

Dans ce cas, le panneau 3 en mousse d'au moins un polyester saturé (constitué par un polyéthylène téréphtalate PET) présente une masse volumique comprise entre 150 kg/m³ (kilogramme par mètre cube) et 250 kg/m³ (kilogramme par mètre cube), de préférence de l'ordre de 200 kg/m³ (kilogramme par mètre cube).

Ce panneau 3 en mousse présente une épaisseur comprise entre 2,3mm (millimètre) et 3,2mm (millimètre), de préférence de l'ordre de 2,7mm (millimètre).

De manière additionnelle, le panneau 3 en mousse d'au moins un polyester saturé (constitué par un polyéthylène téréphtalate PET) présente un module d'Young longitudinal compris entre 110.10⁶ Pa et 140.10⁶ Pa (de préférence de l'ordre de 125.10⁶ Pa) et/ou un module d'Young transversal compris entre 125.10⁶ Pa et 155.10⁶ Pa (de préférence de l'ordre de 140.10⁶ Pa).

De manière alternative ou (et de préférence) additionnelle, un tel panneau 3 en mousse présente une dureté shore A comprise entre 50 et 70 (de préférence de l'ordre de 62) et/ou une dureté shore D comprise entre 8 et 16 (de préférence de l'ordre de 12).

De manière alternative ou (et de préférence) additionnelle, la mousse de ce panneau 3 comporte un nombre de cellules compris entre 25 et 45 cellules par centimètre, de préférence compris entre 30 et 40 cellules par centimètre.

Un exemple de réalisation concerne un panneau 3 d'une telle mousse de polyéthylène téréphtalate (PET) qui est ignifuge et qui peut présenter une épaisseur de 2,7mm (millimètre) et/ou une masse volumique de 200kg/m³ (kilogramme par mètre cube) et/ou une masse surfacique de 0,54kg/m² (kilogramme par mètre carré) et/ou être fourni par la société ARMACELL.

Le tableau 1 ci-dessous mentionne des exemples de moussses d'au moins un polymère (correspondant à celles décrites ci-dessus) ainsi que les caractéristiques physico-chimiques (qui ont été mentionnées ci-dessus) correspondant à ces mousses.

**Tableau 1**

| **Caractéristiques des mousses** | | | | **Tests normatifs sur les mousses** | | | | |
|---|---|---|---|---|---|---|---|---|
| **Composition chimique** | **Réticulation** | **Epaisseur (mm)** | **Masse volumique (kg/m³)** | **Dureté** | | **Module d'Young (10⁶ Pa)** | | **Nombre de cellules pour 10 mm** |
| | | | | **Shore A** | **Shore D** | **Longitudinal** | **Transversal** | |
| PE | Physique | 3 | 300 | 46 | 10 | 52 | 34 | 35 à 40 |
| PP | Non réticulé | 3 | 90 | 53 | 10 | 52 | 28 | 12 à 16 |
| | Non réticulé | 4 | 90 | 52 | 10 | 49 | 38 | 11 à 17 |
| | Non réticulé | 3,1 | 161 | 49 | 11 | 92 | 86 | 10 à 16 |
| | Non réticulé | 3 | 250 | 70 | 17 | 136 | 100 | 9 à 13 |
| | Non réticulé | 3 | 300 | 60 | 11 | 247 | 221 | 10 à 15 |
| | Non réticulé | 3,1 | 332 | 72 | 18 | 258 | 253 | 9 à 13 |
| PET | Non réticulé | 2,7 | 200 | 62 | 12 | 127 | 140 | 30 à 40 |

Une autre caractéristique du dispositif d'obturation 1 concerne le fait qu'il comporte au moins un moyen de fixation 4 qui est configuré pour fixer ce dispositif d'obturation 1 sur une bordure B de l'ouverture traversante O d'un élément de carrosserie E d'un véhicule.

A ce propos, il convient d'observer que le dispositif d'obturation 1 comporte une bordure 5 et que c'est cette bordure 5 qui comporte ledit au moins un moyen de fixation 4, voire qui est au moins en partie (voire intégralement) constituée par ledit au moins un moyen de fixation 4.

Selon un mode de réalisation préféré de l'invention, ledit moyen de fixation 4 s'étend sur l'intégralité du pourtour de l'élément d'obturation 2.

Ledit au moins un moyen de fixation 4 s'étend à partir de l'élément d'obturation 2 et en périphérie de cet élément d'obturation 2.

Selon une autre caractéristique, ledit au moins un moyen de fixation 4 comporte, chacun, au moins un moyen d'accrochage (40 ; 40') configuré pour s'accrocher sur la bordure B de l'ouverture traversante O.

En fait, ledit au moins un moyen de fixation 4 peut, chacun, être constitué par un moyen de clippage ou de clipsage, plus particulièrement qui comporte au moins un moyen d'accrochage (40 ; 40') tel que susmentionné.

De manière alternative, ledit au moins un moyen de fixation 4 peut, chacun, être constitué par un rebord ou une lèvre, plus particulièrement qui constitue au moins un moyen d'accrochage (40 ; 40') tel que susmentionné.

Finalement et tel que visible sur les figures en annexe, ledit au moins un moyen de fixation 4 peut, chacun, être constitué par une rainure 41, une gorge ou analogue.

En fait, une telle rainure 41 ou une telle gorge comporte, de part et d'autre, un moyen d'accrochage (40 ; 40') tel que susmentionné.

Un tel moyen d'accrochage (40 ; 40') peut, alors, également, adopter la forme d'un rebord ou d'une lèvre.

Une autre caractéristique concerne le fait que ledit au moins un moyen de fixation 4 est de type réversible, ceci pour une fixation réversible dudit dispositif d'obturation 1 sur l'élément de carrosserie E. Une telle caractéristique permet, avantageusement, audit dispositif d'obturation 1 d'être retiré en vue d'une intervention (notamment de maintenance ou de réparation) sur l'élément de carrosserie E, voire d'être repositionné sur cet élément de carrosserie E après une telle intervention.

Finalement, ledit au moins un moyen de fixation 4 peut être réalisé dans le même matériau que l'élément d'obturation 2.

Une autre caractéristique du dispositif d'obturation 1 concerne le fait qu'il comporte des moyens d'étanchéité.

De tels moyens d'étanchéité sont configurés pour réaliser l'étanchéité au travers de l'élément de carrosserie E et entre les deux côtés de l'élément de carrosserie E, plus particulièrement entre la zone humide et la zone sèche de cet élément de carrosserie E, ceci au niveau de l'ouverture traversante O de cet élément de carrosserie E. Plus particulièrement, ces moyens d'étanchéité peuvent être configurés pour réaliser l'étanchéité entre ledit dispositif d'obturation 1 (plus particulièrement entre ledit au moins un moyen de fixation 4) et l'élément de carrosserie E.

En fait, une telle étanchéité est assurée vis-à-vis de l'eau, voire encore vis-à-vis de l'air et/ou des particules (notamment de poussière).

Selon un premier mode de réalisation, de tels moyens d'étanchéité sont au moins en partie constitués par ledit élément d'obturation 2 et/ou par ledit au moins un moyen de fixation 4.

Dans un pareil cas, on observera que la forme et/ou les dimensions dudit élément d'obturation 2, respectivement dudit au moins un moyen de fixation 4, sont choisies pour que l'étanchéité soit assurée par la compression dudit élément d'obturation 2, respectivement dudit au moins un moyen de fixation 4, contre le bord et/ou la bordure B de l'ouverture traversante O.

En particulier, lorsque ledit au moins un moyen de fixation 4 est constitué par une rainure 41 ou une gorge, le diamètre de cette rainure 41 ou gorge est choisi supérieur au diamètre de l'ouverture traversante O.

De manière alternative ou (et de préférence) additionnelle, la largeur de cette rainure 41 ou gorge est choisie inférieure à l'épaisseur de l'élément de carrosserie E au niveau de l'ouverture traversante O.

Selon un deuxième mode de réalisation, de tels moyens d'étanchéité sont au moins en partie constitués par un revêtement.

Un tel revêtement revêt au moins une partie de l'élément d'obturation 2, plus particulièrement au moins une partie (voire l'intégralité) de la surface de cet élément d'obturation 2, ceci du côté du dispositif d'obturation 1 destiné à être orienté en direction de la zone sèche ou (et de préférence) de la zone humide de l'élément de carrosserie E.

De manière alternative ou additionnelle, un tel revêtement revêt au moins une partie dudit au moins un moyen de fixation 4, plus particulièrement au moins une partie (voire l'intégralité) de la surface dudit au moins un moyen de fixation 4, ceci du côté du dispositif d'obturation 1 destiné à être orienté en direction de la zone sèche ou (et de préférence) de la zone humide de l'élément de carrosserie E.

En fait, un tel revêtement peut être constitué par un film, un enduit, une couche (notamment une couche de mousse), une plaque (notamment une plaque de mousse) ou analogue.

Un tel revêtement présente une épaisseur comprise entre 10µm (micron) et 7mm (millimètre).

On observera que les moyens d'étanchéité peuvent être constitués par un revêtement en un élastomère thermoplastique (TPE).

Un tel élastomère thermoplastique (TPE) peut être un élastomère thermoplastique styrénique (TPS).

Un mode particulier de réalisation consiste en ce que cet élastomère thermoplastique styrénique est à base de styrène butadiène styrène (SBS).

Un autre mode particulier de réalisation consiste en ce que cet élastomère thermoplastique styrénique est à base de copolymères blocs styréniques.

Encore un autre mode de réalisation consiste en ce que cet élastomère thermoplastique styrénique est à base de polystyrène-b-poly(éthylène-butylène)-b-polystyrène (SEBS) chargé en carbonate de calcium (CaCO3).

A ce propos, on observera qu'un revêtement en élastomère thermoplastique à base de SEBS chargé (CaCO3) peut présenter une dureté Shore A, 3sec=40 selon ISO 868 et/ou une dureté Shore A, 10sec=36 selon ASTM D2240 et/ou être fourni par la société PolyOne (ref. OnFlex AF7210-40).

De manière alternative, un tel élastomère thermoplastique (TPE) peut être un éthylène-propylène-diène monomère (EPDM) notamment de la marque Santoprene®.

Finalement, les moyens d'étanchéité peuvent, encore, être constitués par un revêtement en un polymère thermoplastique notamment polyoléfinique greffé élastomère.

Selon un troisième mode de réalisation, de tels moyens d'étanchéité sont au moins en partie constitués par un cordon ou par une bande.

Un tel cordon ou une telle bande équipe au moins une partie de l'élément d'obturation 2, plus particulièrement au moins une partie de la surface de cet élément d'obturation 2, ceci du côté du dispositif d'obturation 1 destiné à être orienté en direction de la zone sèche ou (et de préférence) de la zone humide de l'élément de carrosserie E.

De manière additionnelle ou (et de préférence) alternative, un tel cordon ou une telle bande équipe au moins une partie dudit au moins un moyen de fixation 4, plus particulièrement au moins une partie (voire l'intégralité) de la surface dudit au moins un moyen de fixation 4, ceci du côté du dispositif d'obturation 1 destiné à être orienté en direction de la zone sèche ou (et de préférence) de la zone humide de l'élément de carrosserie E.

Un mode particulier de réalisation consiste en ce qu'un tel cordon ou une telle bande est à base d'un élastomère thermoplastique (TPE) tel que décrit ci-dessus.

Un autre mode de réalisation consiste en ce qu'un tel cordon ou une telle bande est au moins en partie constitué par une colle thermofusible, notamment extrudée.

Une telle colle peut être un adhésif non sensible à la pression (dit non PSA) et/ou être à base d'une polyoléfine thermofusible (polyéthylène PE et/ou polypropylène PP) et/ou être à base d'éthylène vinyl acétate (EVA), notamment commercialisé sous la référence Technomelt AS 5375 ou Technomelt AS 636 fourni par la société HENKEL.

Encore un autre mode de réalisation consiste en ce qu'un tel cordon ou une telle bande est constitué par un mastic, notamment un mastic déposable à froid ou à chaud, en mono-composant ou bi-composant.

De manière alternative ou (et de préférence) additionnelle, les moyens d'étanchéité sont au moins en partie constitués par un matériau happant, grippant, agrippant ou présentant un effet « tack ».

Un tel matériau peut être constitué par un élastomère thermoplastique (TPE) tel que décrit ci-dessus, un polymère thermoplastique tel que décrit ci-dessus, une colle thermofusible telle que décrite ci-dessus ou un mastic tel que décrit ci-dessus.

Une autre caractéristique concerne le fait que le dispositif d'obturation 1 comporte des moyens d'adhérence pour réaliser une adhérence déterminée dudit élément d'obturation 2 et/ou dudit au moins un moyen de fixation 4 sur l'élément de carrosserie E.

A ce propos, on observera que ces moyens d'adhérence sont au moins en partie constitués par un matériau qui présente des caractéristiques d'adhérence déterminées. Ce matériau présente une caractéristique d'adhérence quand il est mis en contact avec l'élément de carrosserie E, sans laisser de résidu une fois retiré.

En fait une telle adhérence est réalisée sans collage ou adhésion.

Selon un premier mode de réalisation, ces moyens d'adhérence sont au moins en partie constitués par l'élément d'obturation 2 (plus particulièrement par le matériau de cet élément d'obturation 2) et/ou par ledit au moins un moyen de fixation 4 (plus particulièrement par le matériau dudit au moins un moyen de fixation) qui présentent des caractéristiques déterminées d'adhérence, sans collage ou adhésion.

De manière alternative ou (et de préférence) additionnelle, lesdits moyens d'adhérence sont au moins en partie constitués par les moyens d'étanchéité (plus particulièrement par le matériau de ces moyens d'étanchéité) qui présentent, là encore, des caractéristiques déterminées d'adhérence, sans collage ou adhésion. Ici aussi, ce matériau présente une caractéristique d'adhérence quand il est mis en contact avec l'élément de carrosserie E, sans laisser de résidu une fois retiré.

Une autre caractéristique concerne le fait que le dispositif d'obturation 1 comporte des moyens d'amortissement vibratoire 6.

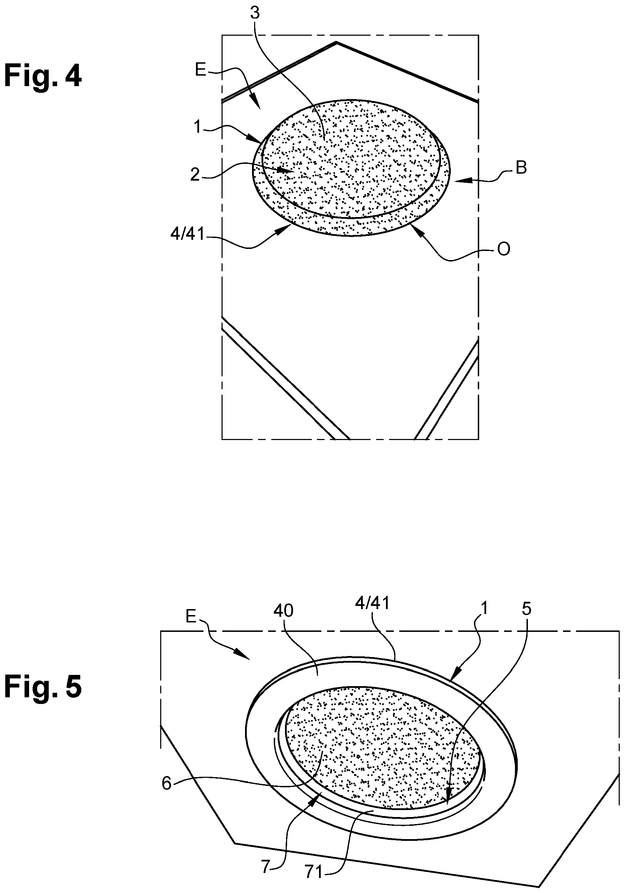

Ces moyens d'amortissement vibratoire 6 équipent au moins ledit élément d'obturation 2 (voire encore au moins en partie ledit au moins un moyen de fixation 4), ceci du côté du dispositif d'obturation 1 destiné à être orienté en direction de la zone humide et/ou du côté destiné à être orienté en direction de la zone sèche (figure 5).

De manière alternative ou additionnelle, c'est au moins ledit élément d'obturation 2 qui comporte, intérieurement ou extérieurement, de tels moyens d'amortissement vibratoire 6.

A ce propos, on observera que ce sont, plus particulièrement, les cellules de la mousse dudit élément d'obturation 2 qui comportent, alors, intérieurement, de tels moyens d'amortissement vibratoire 6.

Quoi qu'il en soit, lesdits moyens d'amortissement vibratoire 6 sont au moins en partie constitués par un matériau (notamment une couche d'un matériau) qui présente des caractéristiques d'atténuation des vibrations déterminées et/ou qui présente des caractéristiques d'isolation acoustique ou phonique déterminées.

Un premier mode de réalisation consiste en ce que ces moyens d'amortissement vibratoire 6 sont constitués par une couche d'un matériau bitumineux qui équipe ledit élément d'obturation 2, notamment en étant rapportée et/ou fixée (par exemple par collage) sur l'élément d'obturation 2.

A ce propos, on observera que ce matériau bitumineux peut contenir du bitume, une charge minérale, et au moins un polymère. Un tel matériau bitumineux est, par exemple, connu sous l'acronyme IFF pour « Insonorisant en Feuille Fusible ».

Un tel matériau bitumineux peut présenter une masse volumique supérieure à 2000kg/m³ (kilogramme par mètre cube), de préférence 2500kg/m³ (kilogramme par mètre cube).

De manière alternative ou (et de préférence) additionnelle, un tel matériau bitumineux présente une épaisseur comprise entre 2mm et 5mm (millimètre), de préférence 3mm (millimètre).

De manière alternative ou (et de préférence) additionnelle, un tel matériau bitumineux présente une masse surfacique comprise entre 4 et 15kg/m² (kilogramme par mètre carré), de préférence 7,5kg/m² (kilogramme par mètre carré).

Finalement, un tel matériau bitumineux peut être fourni par la société FAIST.

Un deuxième mode de réalisation consiste en ce que les moyens d'amortissement vibratoire 6 sont constitués par une plaque de carton qui équipe ledit élément d'obturation 2, notamment en étant rapportée et/ou fixée (par exemple par collage) sur l'élément d'obturation 2.

Une telle plaque de carton peut comporter des ondulations et/ou des cannelures. Selon un mode de réalisation particulier, une telle plaque de cartoon comporte des ondulations à double cannelure.

Une telle plaque de carton peut, alors, présenter une masse surfacique de 1,090kg/m² (kilogramme par mètre carré) et/ou une épaisseur de 7mm (millimètre) et/ou être fourni par la société I PAPER.

Un troisième mode de réalisation consiste en ce que les moyens d'amortissement vibratoire 6 sont constitués par un polymère qui équipe ledit élément d'obturation 2, voire encore ledit au moins un moyen de fixation 4, ceci du côté du dispositif d'obturation 1 destiné à être orienté en direction de la zone humide et/ou du côté destiné à être orienté en direction de la zone sèche (figure 5). Un tel polymère peut, alors, être extrudé (notamment à chaud) directement sur ledit élément d'obturation 2 (voire sur ledit au moins un moyen de fixation 4) et/ou à l'intérieur d'une cavité 7 qui sera décrite plus en détail ci-dessous.

Un tel polymère peut être un élastomère thermoplastique oléfinique non vulcanisé (TPO).

Un mode de réalisation particulier consiste en ce que ce polymère est un styrène butadiène, notamment bloc et/ou chargé.

Un tel polymère peut présenter une masse volumique de 2500kg/m³ (kilogramme par mètre cube) et/ou être fourni par la société PolyOne (réf. GT0400-5003 X2).

Une autre caractéristique concerne le fait que le dispositif d'obturation 1 comporte des moyens de rigidification pour rigidifier au moins l'élément d'obturation 2.

De tels moyens de rigidification sont au moins en partie constitués par les moyens d'étanchéité et/ou par les moyens d'amortissement vibratoire (6) mentionnés ci-dessus.

Finalement, le dispositif d'obturation 1 comporte une cavité 7 qui comporte ou qui est délimitée par, d'une part, un fond 70 constitué par l'élément d'obturation 2 (plus particulièrement par le panneau 3 en mousse que comporte cet élément d'obturation 2) et, d'autre part, au moins une paroi latérale 71, qui s'étend à partir du fond 70, et qui est constituée par une partie de la bordure 5 du dispositif d'obturation 1.

En fait, cette paroi latérale 71 est constituée par une partie de la bordure 5 du dispositif d'obturation 1 qui s'étend entre l'élément d'obturation 2 et ledit au moins un moyen de fixation 4.

Cette cavité 7 est destinée à être orientée en direction de la zone humide ou (et de préférence) en direction de la zone sèche de l'élément de carrosserie E du véhicule (figure 5).

C'est, plus particulièrement, cette cavité 7 qui reçoit, intérieurement, les moyens d'amortissement vibratoire 6 (figure 5), voire encore les moyens d'étanchéité et/ou les moyens de rigidification.

Ces moyens d'amortissement vibratoire 6 (voire encore les moyens d'étanchéité et/ou les moyens de rigidification) remplissent, alors, au moins en partie (voire intégralement) ladite cavité 7.

L'invention concerne, également, un ensemble comportant, d'une part, un élément de carrosserie E de véhicule (automobile, ferroviaire, maritime, aérien ou autre) qui comporte au moins une ouverture traversante O et, d'autre part, au moins un dispositif d'obturation 1, qui présente, chacun, les caractéristiques décrites ci-dessus, et qui obture, chacun, ladite au moins une ouverture traversante O.

En particulier, l'invention concerne un ensemble comportant, d'une part, un élément de carrosserie E de véhicule automobile qui comporte une pluralité d'ouvertures traversantes O et, d'autre part, une pluralité de dispositifs d'obturation 1, qui présentent, chacun, les caractéristiques décrites ci-dessus, et qui referment, chacun, l'une desdites ouvertures traversantes O.

A ce propos, on observera que l'élément d'obturation 2 du dispositif d'obturation 1, respectivement des dispositifs d'obturation 1, présente une forme qui correspond au moins en partie (voire intégralement) à la forme de l'ouverture traversante O, respectivement des ouvertures traversantes O, que comporte l'élément de carrosserie E de véhicule, et qui est obturée par ce dispositif d'obturation 1, respectivement qui sont obturées par ces dispositifs d'obturation 1.

Une autre caractéristique concerne le fait que l'élément de carrosserie E comporte au moins une partie qui comporte, chacune, ladite ouverture traversante O ou l'une des ouvertures traversantes O. Une telle partie présente, alors, une surface qui est au moins en partie plane et/ou convexe et/ou concave. L'élément d'obturation 2, qui obture une telle ouverture traversante O, présente, alors, une forme qui est, alors, elle aussi, au moins en partie plane et/ou convexe et/ou concave.

Une autre caractéristique concerne le fait que l'élément d'obturation 2 du dispositif d'obturation 1 présente des dimensions qui sont inférieures aux dimensions de l'ouverture traversante O. Ceci permet, avantageusement et tel qu'il sera décrit ci-dessous, d'équiper un élément de carrosserie E avec un tel dispositif d'obturation 1, ceci en repoussant ledit élément d'obturation 2 de ce dispositif d'obturation 1 au travers d'une telle ouverture traversante O.

Tel que mentionné ci-dessus, l'élément de carrosserie E présente une zone humide qui peut correspondre à un volume interne, que présente l'élément de carrosserie E (notamment une portière de véhicule), et qui est susceptible d'être en relation avec de l'eau, notamment de l'eau qui s'écoule à l'intérieur de ce volume interne (par exemple entre une vitre et un joint que comporte la portière) .

Cet élément de carrosserie E présente, aussi, une zone sèche qui peut correspondre à un volume interne, que présente l'élément de carrosserie E (notamment une portière de véhicule), et qui est en relation avec l'intérieur de l'habitacle du véhicule.

Les moyens d'étanchéité susmentionnés (que comporte ledit dispositif d'obturation 1) équipent, alors, ladite au moins une partie de l'élément d'obturation 2 et/ou ladite au moins une partie dudit au moins un moyen de fixation 4 du dispositif d'obturation 1, ceci du côté de la zone sèche de l'élément de carrosserie E ou (et de préférence) du côté de la zone humide de l'élément de carrosserie E, voire du côté de la zone sèche ainsi que du côté de la zone humide de l'élément de carrosserie E.

En ce qui concerne les moyens d'amortissement vibratoire (6) susmentionnés (que comporte le dispositif d'obturation 1), ceux-ci équipent au moins ledit élément d'obturation 2 du dispositif d'obturation 1, ceci du côté de la zone humide de l'élément de carrosserie ou (et de préférence) du côté de la zone sèche de l'élément de carrosserie E (figure 5), voire du côté de la zone sèche ainsi que du côté de la zone humide de l'élément de carrosserie E.

De manière alternative ou additionnelle, au moins ledit élément d'obturation 2 du dispositif d'obturation 1 comporte, intérieurement, les moyens d'amortissement vibratoire (6), ceci du côté de la zone sèche de l'élément de carrosserie et/ou du côté de la zone humide de l'élément de carrosserie.

L'invention concerne, aussi, un procédé de fabrication d'un dispositif d'obturation 1 d'une ouverture traversante O d'un élément de carrosserie E d'un véhicule (automobile, ferroviaire, maritime, aérien ou autre). Un tel dispositif d'obturation 1 présente les caractéristiques décrites ci-dessus.

Ce procédé de fabrication consiste en ce qu'au moins ledit élément d'obturation 2 dudit dispositif d'obturation 1 (voire ce dispositif d'obturation 1 tout entier) est réalisé par thermoformage d'une mousse (monocouche ou multicouche), ceci dans un moule de thermoformage (positif ou négatif).

L'invention concerne, aussi, une installation de fabrication d'un dispositif d'obturation 1 d'une ouverture traversante O d'un élément de carrosserie E. Là encore, ledit dispositif d'obturation 1 présente les caractéristiques décrites ci-dessus.

Cette installation comporte au moins un moule (plus particulièrement un moule de thermoformage) qui comporte au moins une partie mobile entre une position de moulage et une position de démoulage.

A ce propos, il convient d'observer que, dans la position de moulage, ladite au moins une partie mobile permet la réalisation (par thermoformage) du dispositif d'obturation 1.

Dans la position de démoulage, ladite au moins une partie mobile permet la libération d'au moins une partie du dispositif d'obturation 1 (notamment dudit au moins un moyen de fixation 4) et autorise, ainsi, le retrait de ce dispositif d'obturation 1 hors du moule.

La présence d'une telle partie mobile permet, avantageusement, de remédier à des caractéristiques d'étirement du matériau du dispositif d'obturation 1 qui pourraient ne pas permettre l'extraction en force de ce dispositif d'obturation 1 hors du moule, ceci sans occasionner de dégradation à ce dispositif d'obturation 1.

Finalement, l'invention concerne un procédé d'obturation d'une ouverture traversante O d'un élément de carrosserie E d'un véhicule.

Ce procédé met en œuvre le dispositif d'obturation 1 décrit ci-dessus.

Ce procédé consiste en ce que :
- on positionne le dispositif d'obturation 1 par rapport à l'élément de carrosserie E en sorte que l'élément d'obturation 2 de ce dispositif d'obturation 1 soit en face de l'ouverture traversante O à obturer, ceci dans la zone sèche ou (et de préférence) dans la zone humide de l'élément de carrosserie E ;
- on assure la coopération dudit au moins un moyen de fixation 4 avec la bordure B de l'ouverture traversante O à obturer.

A ce propos, on observera qu'on assure une telle coopération, tout d'abord et à partir d'une configuration initiale dudit au moins un moyen de fixation 4, en déformant au moins en partie ledit au moins un moyen de fixation 4 et, ensuite et après déformation, en autorisant ledit au moins un moyen de fixation 4 à revenir au moins en partie dans sa configuration initiale.

En fait, on déforme ledit au moins moyen de fixation 4 en exerçant une pression sur l'élément d'obturation 2.

De manière plus précise, on exerce une pression sur ledit élément d'obturation 2 qui vise à repousser ledit élément d'obturation 2 à travers l'ouverture traversante O à obturer, ceci à partir de la zone sèche et en direction de la zone humide de l'élément de carrosserie E ou (et de préférence) à partir de la zone humide et en direction de la zone sèche de l'élément de carrosserie E.

## Revendications

1. Dispositif d'obturation (1) d'une ouverture traversante (O) d'un élément de carrosserie (E) d'un véhicule, ce dispositif (1) comporte un élément d'obturation (2) ainsi qu'au moins un moyen de fixation (4), qui est configuré pour fixer le dispositif d'obturation (1) sur une bordure (B) de l'ouverture traversante (O), que comporte une bordure (5) de ce dispositif d'obturation (1), et qui s'étend à partir de l'élément d'obturation (2) et en périphérie de cet élément d'obturation (2), **caractérisé par le fait que** l'élément d'obturation (2) est constitué par un panneau (3) qui est en mousse d'au moins un polymère, et qui présente une masse volumique comprise entre 70 kg/m³ et 450 kg/m³ ainsi qu'une épaisseur comprise entre 2mm et 5mm.

2. Dispositif d'obturation (1) selon la revendication 1, **caractérisé par le fait que** le panneau (3) est thermoformé.

3. Dispositif d'obturation (1) selon l'une quelconque des revendications précédentes, **caractérisé par le fait que**, d'une part, ledit au moins un polymère est constitué par une polyoléfine, d'autre part, le panneau (3) en mousse présente une masse volumique comprise entre 70 kg/m³ et 450 kg/m³ ainsi qu'une épaisseur comprise entre 2mm et 5mm.

4. Dispositif d'obturation (1) selon la revendication 3, **caractérisé par le fait que**, d'une part, la polyoléfine est un polypropylène, notamment non réticulé, et, d'autre part, le panneau (3) en mousse présente une masse volumique comprise entre 80 kg/m³ et 400 kg/m³ ainsi qu'une épaisseur comprise entre 2,5mm et 4,5mm.

5. Dispositif d'obturation (1) selon la revendication 3, **caractérisé par le fait que**, d'une part, la polyoléfine est un polyéthylène, notamment réticulé, et, d'autre part, le panneau (3) en mousse présente une masse volumique comprise entre 250 kg/m³ et 350 kg/m³ ainsi qu'une épaisseur comprise entre 2,5mm et 3,5mm.

6. Dispositif d'obturation (1) selon l'une quelconque des revendications 1 ou 2, **caractérisé par le fait que**, d'une part, ledit au moins un polymère est constitué par un polyester, notamment saturé, et, d'autre part, le panneau (3) en mousse présente une masse volumique comprise entre 100 kg/m³ et 300 kg/m³ ainsi qu'une épaisseur comprise entre 2mm et 3,5mm.

7. Dispositif d'obturation (1) selon la revendication 6, **caractérisé par le fait que**, d'une part, le polyester est saturé et est un polyéthylène téréphtalate, notamment non réticulé, et, d'autre part, le panneau (3) en mousse présente une masse volumique comprise entre 150 kg/m³ et 250 kg/m³ ainsi qu'une épaisseur comprise entre 2,3mm et 3,2mm.

8. Dispositif d'obturation (1) selon l'une quelconque des revendications précédentes, **caractérisé par le fait que** le panneau (3) en mousse présente un module d'Young longitudinal compris entre 30.10⁶ Pa et 300.10⁶ Pa et/ou un module d'Young transversal compris entre 20.10⁶ Pa et 300.10⁶ Pa.

9. Dispositif d'obturation (1) selon l'une quelconque des revendications précédentes, **caractérisé par le fait que** le panneau (3) en mousse présente une dureté shore A comprise entre 35 et 80 et/ou une dureté shore D comprise entre 5 et 25.

10. Dispositif d'obturation (1) selon l'une quelconque des revendications précédentes, **caractérisé par le fait que** la mousse du panneau (3) en mousse comporte un nombre de cellules compris entre 5 et 60 cellules par centimètre.

11. Dispositif d'obturation (1) selon l'une quelconque des revendications précédentes, **caractérisé par le fait que** ledit au moins un moyen de fixation (4) s'étend sur l'intégralité du pourtour de l'élément d'obturation (2) et/ou comporte, chacun, au moins un moyen d'accrochage (40 ; 40') configuré pour s'accrocher sur la bordure (B) de l'ouverture traversante (O).

12. Dispositif d'obturation (1) selon l'une quelconque des revendications précédentes, **caractérisé par le fait qu'**il comporte des moyens d'étanchéité qui sont au moins en partie constitués par ledit élément d'obturation (2) et/ou par ledit au moins un moyen de fixation (4).

13. Dispositif d'obturation (1) selon l'une quelconque des revendications 1 à 11, **caractérisé par le fait qu'**il comporte des moyens d'étanchéité qui sont au moins en partie constitués par un revêtement qui revêt au moins une partie de l'élément d'obturation (2) et/ou au moins une partie dudit au moins un moyen de fixation (4) .

14. Dispositif d'obturation (1) selon l'une quelconque des revendications 1 à 11, **caractérisé par le fait qu'**il comporte des moyens d'étanchéité, qui sont au moins en partie constitués par un cordon ou par une bande, et qui équipent au moins une partie de l'élément d'obturation (2) et/ou au moins une partie dudit au moins un moyen de fixation (4).

15. Dispositif d'obturation (1) selon l'une quelconque des revendications précédentes, **caractérisé par le fait qu'**il comporte des moyens d'adhérence pour réaliser une adhérence déterminée dudit élément d'obturation (2) et/ou dudit au moins un moyen de fixation (4) sur l'élément de carrosserie (E).

16. Dispositif d'obturation (1) selon l'une quelconque des revendications précédentes, **caractérisé par le fait qu'**il comporte des moyens d'amortissement vibratoire (6) qui équipent au moins ledit élément d'obturation (2) et/ou que comporte, intérieurement ou extérieurement, au moins ledit élément d'obturation (2).

## Patentansprüche

1. Verschlussvorrichtung (1) für eine durchgehende Öffnung (O) eines Karosserieelements (E) eines Fahrzeugs, diese Vorrichtung (1) umfasst ein Verschlusselement (2) sowie mindestens ein Befestigungsmittel (4), das konfiguriert ist, um die Verschlussvorrichtung (1) an einen Rand (B) der durchgehenden Öffnung (O) zu befestigen, welchen eine Kante (5) dieser Verschlussvorrichtung (1) umfasst und der sich ab dem Verschlusselement (2) und am Umfang dieses Verschlusselements (2) erstreckt, **dadurch gekennzeichnet, dass** das Verschlusselement (2) aus einer Platte (3) besteht, die aus Schaumstoff mindestens eines Polymers besteht, und die ein Volumengewicht zwischen 70 kg/m³ und 450 kg/m³ sowie eine Dicke zwischen 2 mm und 5 mm aufweist.

2. Verschlussvorrichtung (1) nach Anspruch 1, **dadurch gekennzeichnet, dass** die Platte (3) thermogeformt ist.

3. Verschlussvorrichtung (1) nach irgendeinem der vorhergehenden Ansprüche, **dadurch gekennzeichnet, dass** einerseits das besagte mindestens eine Polymer aus einem Polyolefin besteht, andererseits die Platte (3) aus Schaumstoff ein Volumengewicht zwischen 70 kg/m³ und 450 kg/m³ sowie eine Dicke zwischen 2 mm und 5 mm aufweist.

4. Verschlussvorrichtung (1) nach Anspruch 3, **dadurch gekennzeichnet, dass** einerseits das Polyolefin ein Polypropylen, nämlich ein unvernetztes Polypropylen ist, und andererseits die Platte (3) aus Schaumstoff ein Volumengewicht zwischen 80 kg/m³ und 400 kg/m³ sowie eine Dicke zwischen 2,5 mm und 4,5 mm aufweist.

5. Verschlussvorrichtung (1) nach Anspruch 3, **dadurch gekennzeichnet, dass** einerseits das Polyolefin ein Polyethylen, nämlich ein vernetztes Polyethylen ist, und andererseits die Platte (3) aus Schaumstoff ein Volumengewicht zwischen 250 kg/m³ und 350 kg/m³ sowie eine Dicke zwischen 2,5 mm und 3,5 mm aufweist.

6. Verschlussvorrichtung (1) nach irgendeinem der Ansprüche 1 oder 2, **dadurch gekennzeichnet, dass** einerseits das besagte mindestens eine Polymer aus einem Polyester, nämlich einem gesättigten Polyester, besteht, und andererseits die Platte (3) aus Schaumstoff ein Volumengewicht zwischen 100 kg/m³ und 300 kg/m³ sowie eine Dicke zwischen 2 mm und 3,5 mm aufweist.

7. Verschlussvorrichtung (1) nach Anspruch 6, **dadurch gekennzeichnet, dass** einerseits der Polyester gesättigt und ein Polyethylenterephthalat, nämlich ein unvernetztes Polyethylenterephthalat ist, und andererseits die Platte (3) aus Schaumstoff ein Volumengewicht zwischen 150 kg/m³ und 250 kg/m³ sowie eine Dicke zwischen 2,3 mm und 3,2 mm aufweist.

8. Verschlussvorrichtung (1) nach irgendeinem der vorhergehenden Ansprüche, **dadurch gekennzeichnet, dass** die Platte (3) aus Schaumstoff einen Youngschen Längsmodul zwischen 30,10⁶ Pa und 300,10⁶ Pa und/oder einen Youngschen Quermodul zwischen 20,10⁶ Pa und 300,10⁶ Pa aufweist.

9. Verschlussvorrichtung (1) nach irgendeinem der vorhergehenden Ansprüche, **dadurch gekennzeichnet, dass** die Platte (3) aus Schaumstoff eine Shore A-Härte zwischen 35 und 80 und/oder eine Shore D-Härte zwischen 5 und 25 aufweist.

10. Verschlussvorrichtung (1) nach irgendeinem der vorhergehenden Ansprüche, **dadurch gekennzeichnet, dass** der Schaum der Platte (3) aus Schaumstoff eine Anzahl von Zellen zwischen 5 und 60 Zellen pro Zentimeter umfasst.

11. Verschlussvorrichtung (1) nach irgendeinem der vorhergehenden Ansprüche, **dadurch gekennzeichnet, dass** sich das besagte mindestens eine Befestigungsmittel (4) über den gesamten Umfang des Verschlusselements (2) erstreckt und/oder jeweils mindestens eine Einhakmittel (40 ; 40') umfasst, das konfiguriert ist, um an dem Rand (B) der durchgehenden Öffnung (O) einzuhängen.

12. Verschlussvorrichtung (1) nach irgendeinem der vorhergehenden Ansprüche, **dadurch gekennzeichnet, dass** sie Dichtungsmittel umfasst, die zumindest teilweise aus dem besagten Verschlusselement (2) und/oder dem besagten mindestens einen Befestigungsmittel (4) bestehen.

13. Verschlussvorrichtung (1) nach irgendeinem der Ansprüche 1 bis 11, **dadurch gekennzeichnet, dass** sie Dichtungsmittel umfasst, die zumindest teilweise aus einer Beschichtung bestehen, die mindestens einen Teil des Verschlusselements (2) und/oder mindestens einen Teil des besagten mindestens einen Befestigungsmittels (4) beschichtet.

14. Verschlussvorrichtung (1) nach irgendeinem der Ansprüche 1 bis 11, **dadurch gekennzeichnet, dass** sie Dichtungsmittel umfasst, die zumindest teilweise aus einer Schnur oder einem Streifen bestehen und die mindestens einen Teil des Verschlusselements (2) und/oder mindestens einen Teil des besagten mindestens einen Befestigungsmittels (4) ausstatten.

15. Verschlussvorrichtung (1) nach irgendeinem der vorhergehenden Ansprüche, **dadurch gekennzeichnet, dass** sie Haftmittel umfasst, um eine bestimmte Haftung des besagten Verschlusselements (2) und/oder des besagten mindestens einen Befestigungsmittels (4) an dem Karosserieelement (E) zu erreichen.

16. Verschlussvorrichtung (1) nach irgendeinem der vorhergehenden Ansprüche, **dadurch gekennzeichnet, dass** sie Schwingungsdämpfungsmittel (6) umfasst, die mindestens das besagte Verschlusselement (2) ausstatten und/oder welche mindestens das besagte Verschlusselement (2) innen oder außen umfasst.

## Claims

1. Closing device (1) for a through-opening (O) of a body element (E) of a vehicle, this device (1) includes a closing element (2) as well as at least one fastening means (4), which is configured to fasten the closing device (1) on an edge (B) of the through-opening (O), which an edge (5) of this closing device (1) includes, and which extends from the closing element (2) and at the periphery of this closing element (2), wherein the closing element (2) consists of a panel (3), which is made of foam of at least one polymer, and which has a volume weight ranging between 70 kg/m³ and 450 kg/m³ as well as a thickness ranging between 2mm and 5mm.

2. Closing device (1) according to claim 1, wherein the panel (3) is thermoformed.

3. Closing device (1) according to any one of the preceding claims, wherein, on the one hand, said at least one polymer consists of a polyolefin, on the other hand, the panel (3) made of foam has a volume weight ranging between 70 kg/m³ and 450 kg/m³ as well as a thickness ranging between 2mm and 5mm.

4. Closing device (1) according to claim 3, wherein, on the one hand, the polyolefin is a polypropylene, namely a non-crosslinked polypropylene, and, on the other hand, the panel (3) made of foam has a volume weight ranging between 80 kg/m³ and 400 kg/m³ as well as a thickness ranging between 2.5mm and 4.5mm.

5. Closing device (1) according to claim 3, wherein, on the one hand, the polyolefin is a polyethylene, namely a crosslinked polyethylene, and, on the other hand, the panel (3) made of foam has a volume weight ranging between 250 kg/m³ and 350 kg/m³ as well as a thickness ranging between 2.5mm and 3.5mm.

6. Closing device (1) according to any one of claims 1 or 2, wherein, on the one hand, said at least one polymer consists of a polyester, namely a saturated polymer, and, on the other hand, the panel (3) made of foam has a volume weight ranging between 100 kg/m³ and 300 kg/m³ as well as a thickness ranging between 2mm and 3.5mm.

7. Closing device (1) according to claim 6, wherein, on the one hand, the polyester is saturated and is a polyethylene terephthalate, namely a non-crosslinked polyethylene terephthalate, and, on the other hand, the panel (3) made of foam has a volume weight ranging between 150 kg/m³ and 250 kg/m³ as well as a thickness ranging between 2.3mm and 3.2mm.

8. Closing device (1) according to any one of the preceding claims, wherein the panel (3) made of foam has a longitudinal Young modulus ranging between 30.10⁶ Pa and 300.10⁶ Pa and/or a transverse Young modulus ranging between 20.10⁶ Pa and 300.10⁶ Pa.

9. Closing device (1) according to any one of the preceding claims, wherein the panel (3) made of foam has a Shore A hardness ranging between 35 and 80 and/or a Shore D hardness ranging between 5 and 25.

10. Closing device (1) according to any one of the preceding claims, wherein the foam of the panel (3) made of foam includes a number of cells ranging between 5 and 60 cells per centimeter.

11. Closing device (1) according to any one of the preceding claims, wherein said at least one fastening means (4) extends over the entire periphery of the closing element (2) and/or each include at least one hooking means (40 ; 40') configured to hook onto the edge (B) of the through opening (O).

12. Closing device (1) according to any one of the preceding claims, wherein it includes sealing means, which consist at least in part of said closing element (2) and/or of said at least one fastening means (4).

13. Closing device (1) according to any one of claims 1 to 11, wherein it includes sealing means, which consist at least in part of a coating, which coats at least a portion of the closing element (2) and/or at least a portion of said at least one fastening means (4).

14. Closing device (1) according to any one of claims 1 to 11, wherein it includes sealing means, which consist at least in part of a cord or a strip, and which equip at least a portion of the closing element (2) and/or at least a portion of said at least one fastening means (4).

15. Closing device (1) according to any one of the preceding claims, wherein it includes adhesion means for carrying out a determined adhesion of said closing element (2) and/or of said at least one fastening means (4) on the body element (E).

16. Closing device (1) according to any one of the preceding claims, wherein it includes vibration damping means (6), which equip at least said closing element (2) and/or which at least said closing element (2) includes inside or outside.
